# EUROPEAN PATENT APPLICATION

(11) **EP 2 949 820 A1**
(43) Date of publication of application: **02.12.2015**
(21) Application number: 13873027.0
(22) Date of filing: 23.01.2013
(51) Int. Cl.: E02F 9/22, E02F 9/02

(54) **METHOD FOR CONTROLLING DRIVING SPEED OF CONSTRUCTION MACHINERY**

(71) Applicant: Volvo Construction Equipment AB, 631 85 Eskilstuna (SE)
(72) Inventor: LEE, Chun-Han, Gimhae-si Gyeongsangnam-do 621-785 (KR)
(74) Representative: Zimmermann, Tankred Klaus
(86) International application number: PCT/KR2013/000532
(87) International publication number: WO 2014/115905

(57) **Abstract**

Disclosed is a method for controlling a driving speed of construction machinery for preventing a sudden change in the driving speed during a combined operation for operating a work device while driving an excavator. The method for controlling the driving speed of the construction machinery, according to one embodiment of the present invention, relates to the method for controlling the driving speed of the construction machinery comprising a lower driving body, a turning device for turning an upper turning body with respect to the lower driving body, a driving device, the work device, an electronic proportional valve for controlling the discharge flow rate of a hydraulic pump, and a controller. The method comprises: a first step of detecting the amount of operation of the driving device, the work device, and the turning device according to the operation of same; a second step of calculating a required working oil flow rate corresponding to the amount of operation of the driving device, the work device, and the turning device; a third step of reducing the required working oil flow rate of the driving device calculated in the second step, according to a ratio set by a driver, so that an independent maximum driving speed of the driving device can be reduced by the setting by the driver; and a fourth step of combining the required working oil flow rates calculated in the second step and the third step, and outputting a control signal to the electronic proportional valve so that the combined flow rate is discharged from the hydraulic pump..

## Description

### TECHNICAL FIELD

The present invention relates to a traveling speed control method for a construction machinery. More particularly, the present invention relates to such a traveling speed control method for a construction machine in which when a combined operation is performed in which the working apparatus is manipulated during the separate traveling of the machine, a sudden change in the traveling speed is prevented.

### BACKGROUND OF THE INVENTION

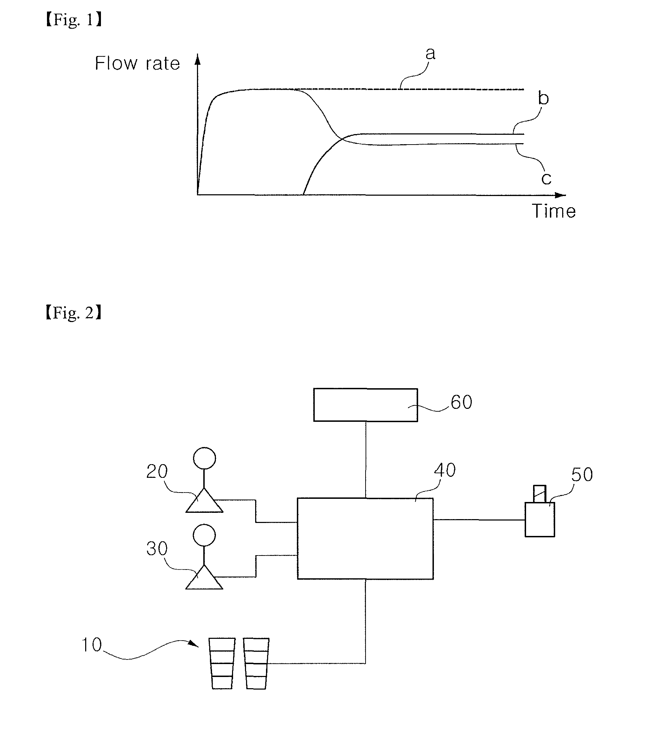

Fig. 1 is a graph showing a discharge flow rate of hydraulic fluid discharged from a hydraulic pump when a working apparatus is manipulated during the traveling operation of the construction machine in accordance with the prior art.

In general, an excavator performs an excavation operation and the like by manipulating left and right traveling apparatuses and a working apparatus including a boom and the like. In the case where the traveling apparatus or the working apparatus is manipulated separately depending on the working conditions, a maximum flow rate of hydraulic fluid is discharged from the hydraulic pump, thereby increasing the working speed.

Meanwhile, when a combined operation is performed in which the working apparatus is manipulated during a separate traveling of the machine, a maximum flow rate of hydraulic fluid (indicated by a curve "a" in a graph of Fig. 1) discharged from the hydraulic pump is dispensively supplied to the traveling apparatus (indicated by a curve "c" in a graph of Fig. 1) or the working apparatus (indicated by a curve "d" in a graph of Fig. 1), thus leading to a remarkable decrease in the traveling speed. In addition, when the traveling apparatus and the working apparatus are manipulated simultaneously to cause the traveling speed to be remarkably decreased, there is caused a problem in that a traveling shock is induced due to a reduction in the traveling speed to weigh an operator's fatigue, and the work efficiency is deteriorated due to a difficulty of the work upon the combined operation of the machine.

### SUMMARY OF THE INVENTION

Accordingly, the present invention has been made to solve the aforementioned problems occurring in the prior art, and it is an object of the present invention to provide a traveling speed control method for a construction machine, in which a separate maximum traveling speed of a traveling apparatus is set to a low speed so that when the working apparatus is manipulated during the traveling operation of the construction machine, a sudden change in the traveling speed can be prevented.

### TECHNICAL SOLUTION

To achieve the above object, in accordance with an embodiment of the present invention, there is provided a traveling speed control method for a construction machine including a lower traveling structure, a swing apparatus configured to swing an upper swing structure with respect to the lower traveling structure, a traveling apparatus, a working apparatus, an electronic proportional valve configured to control a discharge flow rate of hydraulic fluid discharged from a hydraulic pump, and a controller, the traveling speed control method including:
a first step of detecting the manipulation amounts of the traveling apparatus, the working apparatus, and the swing apparatus according to the manipulation of the traveling apparatus, the working apparatus, and the swing apparatus;
a second step of calculating required flow rates of hydraulic fluid, which correspond to the manipulation amounts of the traveling apparatus, the working apparatus, and the swing apparatus;
a third step of decreasing the required flow rate of hydraulic fluid of the traveling apparatus, which is calculated in the second step in accordance with a ratio set by an operator so that a separate maximum traveling speed of the traveling apparatus can be decreased by an operator's setting; and
a fourth step of outputting a control signal to the electronic proportional valve so that the required flow rates of hydraulic fluid, which are calculated in the second and third steps, are combined and the combined flow rates of the hydraulic fluid is discharged from the hydraulic pump.

In the traveling speed control method, a determination means may determine whether the traveling apparatus, the working apparatus, and the swing apparatus are manipulated based on an electrical signal value that is output by the manipulation of an electric joystick or a secondary pressure value that is output by the manipulation of a hydraulic joystick.

In the traveling speed control method, any one of an on/off function switch, a potentiometer, a display device, and a cluster, which are installed in a cabin of the machine, may be used as a setting means capable of reducing the separate maximum traveling speed of the traveling apparatus by the operator's setting.

### ADVANTAGEOUS EFFECT

The traveling speed control method for a construction machine in accordance with an embodiment of the present invention as constructed above has the following advantages.

The separate maximum traveling speed of the traveling apparatus is set to a low speed so that when the working apparatus is manipulated during the traveling operation of the construction machine, a traveling shock due to a sudden change in the traveling speed can be decreased, thereby reducing an operator's fatigue and improving workability.

In addition, the traveling speed of traveling apparatus is set to a low speed while maintaining the driving speed of the working apparatus so that the engine's RPM need not to be adjusted to be lowered in order to reduce the traveling speed of the traveling apparatus.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a graph showing a discharge flow rate of hydraulic fluid discharged from a hydraulic pump when a working apparatus is manipulated during the traveling operation of the construction machine in accordance with the prior art;
Fig. 2 is a block diagram showing a configuration of a hydraulic system used in a traveling speed control method for a construction machine in accordance with a preferred embodiment of the present invention;
Fig. 3 is a flow chart showing a traveling speed control method for a construction machine in accordance with a preferred embodiment of the present invention; and
Fig. 4 is a graph showing a discharge flow rate of hydraulic fluid discharged from a hydraulic pump when a working apparatus is manipulated during the traveling operation of a construction machine in a traveling speed control method for the construction machine in accordance with a preferred embodiment of the present invention.

### * Explanation on reference numerals of main elements in the drawings *

1: engine
10: hydraulic pedal
20, 30: hydraulic joystick
40: controller
50: electronic proportional valve
60: cluster

### DETAILED DESCRIPTION OF THE INVENTION

Hereinafter, a traveling speed control method for a construction machine in accordance with a preferred embodiment of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

In order to definitely describe the present invention, a portion having no relevant to the description will be omitted, and through the specification, like elements are designated by like reference numerals.

In the specification and the claims, when a portion includes an element, it is meant to include other elements, but not exclude the other elements unless otherwise specifically stated herein.

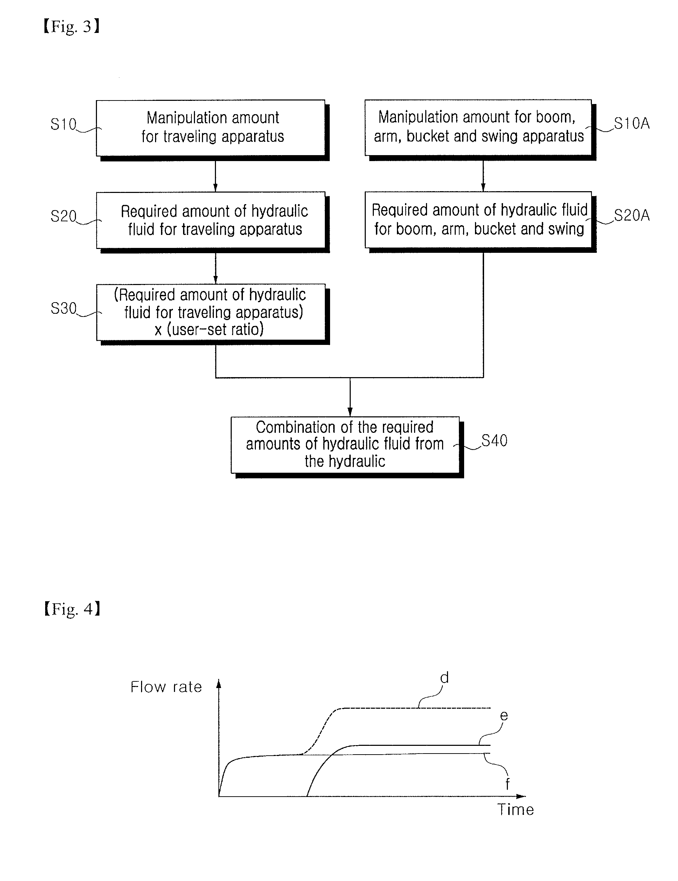

Fig. 2 is a block diagram showing a configuration of a hydraulic system used in a traveling speed control method for a construction machine in accordance with a preferred embodiment of the present invention, Fig. 3 is a flow chart showing a traveling speed control method for a construction machine in accordance with a preferred embodiment of the present invention, and Fig. 4 is a graph showing a discharge flow rate of hydraulic fluid discharged from a hydraulic pump when a working apparatus is manipulated during the traveling operation of a construction machine in a traveling speed control method for the construction machine in accordance with a preferred embodiment of the present invention.

Referring to Figs. 2 and 3, in accordance with a preferred embodiment of the present invention, the present invention provides a traveling speed control method for a construction machine including a lower traveling structure, an upper swing structure mounted on the lower traveling structure so as to be swingable by a swing apparatus; a traveling apparatus mounted on the lower traveling structure, a working apparatus including a boom, an arm and a bucket, an electronic proportional valve configured to control a discharge flow rate of hydraulic fluid discharged from a hydraulic pump connected to an engine, and a controller. The traveling speed control method includes:
a first step (S10, S10A) of outputting a manipulation signal corresponding to a manipulation amount of each of a hydraulic pedal 10 and hydraulic joysticks 20 and 30 upon the manipulation of the hydraulic pedal 10 and the hydraulic joysticks 20 and 30 to drive the traveling apparatus, the working apparatus, and the swing apparatus;
a second step (S20,S20A) of allowing the controller 40 to respectively calculate required flow rates of hydraulic fluid, which correspond to the manipulation amounts of the traveling apparatus, the working apparatus, and the swing apparatus;
a third step (S30) of decreasingly re-calculating the required flow rate of hydraulic fluid of the traveling apparatus, which is calculated in the second step S20 in accordance with a ratio set by an operator so that a separate maximum traveling speed of the traveling apparatus can be decreased by an operator's setting; and
a fourth step (S40) of outputting an electrical control signal to the electronic proportional valve 50 so that the required flow rates of hydraulic fluid, which are calculated in the second and third steps S20, S20A and S30, are combined and the combined flow rates of the hydraulic fluid is discharged from the hydraulic pump (not shown).

A determination means can determine whether the traveling apparatus, the working apparatus, and the swing apparatus are manipulated based on a secondary pressure value that is output to the controller 40 by the manipulation of the hydraulic pedal 10 and the hydraulic joysticks 20 and 30. In this case, when at least any one of the hydraulic pedal 10 and the hydraulic joysticks 20 and 30 is an electric joystick, the determination means can determine whether the traveling apparatus, the working apparatus, and the swing apparatus are manipulated based on an electrical signal value that is output to the controller 40 by the manipulation of the hydraulic pedal 10 and the hydraulic joysticks 20 and 30.

Any one of an on/off function switch, a potentiometer, a display device, and a cluster 60, which are installed in a cabin of the machine can be used as a setting means capable of reducing the separate maximum traveling speed of the traveling apparatus by the operator's setting.

According to the configuration as described above, in step S10, when the hydraulic pedal 10 is manipulated by the operator to allow an excavator to travel by an operator, a manipulation signal corresponding to a manipulation amount of the hydraulic pedal 10 is output to the controller 40.

In step S10A, when the hydraulic joystick (e.g., RCV lever) 20 or 30 is manipulated by the operator so that the working apparatus or the swing apparatus can be driven, a manipulation signal (i.e., a secondary pressure value) corresponding to a manipulation amount of the hydraulic joystick 20 or 30 is output to the controller 40.

In step S20, the controller 40 calculates a required flow rate of hydraulic fluid, which corresponds to the manipulation amount of the hydraulic pedal 10.

In step S20A, the controller 40 respectively calculates the required flow rates of hydraulic fluid, which correspond to the manipulation amounts of the hydraulic joysticks 20 and 30.

In step S30, the controller 40 decreasingly re-calculates the required flow rate of hydraulic fluid of the traveling apparatus, which is calculated in the second step S20 in accordance with a ratio (for example, the ratio can be set by the operator to decrease the maximum traveling speed to 20%, 30%, 50%, etc.) set by an operator so that the separate maximum traveling speed of the traveling apparatus can be decreased by an operator's setting. In this case, any one of an on/off function switch, a potentiometer, a display device, and a cluster 60, which are installed in the cabin of the machine so as to be manipulated by the operator may be used as a setting means capable of reducing the separate maximum traveling speed of the traveling apparatus by the operator's setting. For example, a speed decreasing ratio is previously set in the cluster 60 so that the separate maximum traveling speed of the traveling apparatus can be decreased by the operator. Thus, the operator can select the speed decreasing ratio previously set in the cluster 60 to reduce the traveling speed during the traveling operation of the machine.

In step S40, controller 40 outputs an electrical control signal to the electronic proportional valve 50 so that the required flow rates of hydraulic fluid (i.e., the required flow rate of hydraulic fluid of the working apparatus and the reduced flow rate of hydraulic fluid of the traveling apparatus), which are calculated in the second and third steps S20A and S30, are combined and the combined flow rates of the hydraulic fluid is discharged from the hydraulic pump. For this reason, a regulator of the hydraulic pump is driven by a secondary pressure generated to correspond to the electrical control signal that is input to the electronic proportional valve 50 so as to variably control a swivel angle of a swash plate of the hydraulic pump so that the discharge flow rate of hydraulic fluid from the hydraulic pump can be controlled.

As shown in a graph of Fig. 4, the separate maximum traveling speed of the traveling apparatus is decreased by the operator's setting so that the maximum traveling speed can be reduced even during the separate traveling of the machine. In addition, even in the case where a combined operation is performed in which the working apparatus is manipulated during the separate traveling of the machine, a sudden reduction in the traveling speed is prevented (see a curve "f" in a graph of Fig. 4) so that the occurrence of a traveling shock can be decreased, workability can be improved, and the operator's fatigue can be reduced. Further, the separate maximum traveling speed is decreased by the operator's setting so that the discharge flow rate of hydraulic fluid discharged from the hydraulic pump can be reduced at an initial stage of the traveling operation (see a curve "d" in a graph of Fig. 4). In addition, only the traveling speed of the traveling apparatus is set to be decreased while constantly maintaining the driving speed of the working apparatus (see a curve "e" in a graph of Fig. 4) so that the traveling speed of traveling apparatus is set to a low speed while maintaining the driving speed of the working apparatus so that the engine's RPM need not to be adjusted to be lowered in order to reduce the traveling speed of the traveling apparatus.

### INDUSTRIAL APPLICABILITY

In accordance with the traveling speed control method for a construction machine of the present invention as constructed above, the separate maximum traveling speed of the traveling apparatus is set to a low speed so that when the working apparatus is manipulated during the traveling operation of the construction machine, a sudden change in the traveling speed can be prevented.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A traveling speed control method for a construction machine including a lower traveling structure, a swing apparatus configured to swing an upper swing structure with respect to the lower traveling structure, a traveling apparatus, a working apparatus, an electronic proportional valve configured to control a discharge flow rate of hydraulic fluid discharged from a hydraulic pump, and a controller, the traveling speed control method comprising:
a first step of detecting the manipulation amounts of the traveling apparatus, the working apparatus, and the swing apparatus according to the manipulation of the traveling apparatus, the working apparatus, and the swing apparatus;
a second step of calculating required flow rates of hydraulic fluid, which correspond to the manipulation amounts of the traveling apparatus, the working apparatus, and the swing apparatus;
a third step of decreasing the required flow rate of hydraulic fluid of the traveling apparatus, which is calculated in the second step in accordance with a ratio set by an operator so that a separate maximum traveling speed of the traveling apparatus can be decreased by an operator's setting; and
a fourth step of outputting a control signal to the electronic proportional valve so that the required flow rates of hydraulic fluid, which are calculated in the second and third steps, are combined and the combined flow rates of the hydraulic fluid is discharged from the hydraulic pump.

2. The traveling speed control method according to claim 1, wherein a determination means determines whether the traveling apparatus, the working apparatus, and the swing apparatus are manipulated based on an electrical signal value that is output by the manipulation of an electric joystick or a secondary pressure value that is output by the manipulation of a hydraulic joystick.

3. The traveling speed control method according to claim 1, wherein any one of an on/off function switch, a potentiometer, a display device, and a cluster, which are installed in a cabin of the machine is used as a setting means capable of reducing the separate maximum traveling speed of the traveling apparatus by the operator's setting.
